# DEMANDE DE BREVET EUROPEEN

(11) **EP 1 482 614 A2**
(43) Date de publication de la demande: **01.12.2004**
(21) Numéro de dépôt: 04290670.1
(22) Date de dépôt: 11.03.2004
(51) Int. Cl.: H02G 3/06, H02G 3/08

(54) **Boite pour câbles et/ou conducteurs électriques**

(30) Priorité: 14.03.2003 FR 0303182
(71) Demandeur: LEGRAND, 87000 Limoges (FR); LEGRAND SNC, 87000 Limoges (FR)
(72) Inventeur: Favalessa, Thierry, 87240 Ambazac (FR); Gourcerol, Jean-Jacques, 87220 Feytiat (FR)
(74) Mandataire: Lepelletier-Beaufond, François

(57) **Abrégé**

La présente invention concerne une boîte (100) destinée à recevoir des câbles et/ou des conducteurs électriques, comprenant une paroi latérale (101) pourvue localement d'au moins un aménagement (110) apte à accueillir, de manière étanche, l'extrémité coupée d'une gaine de transport des câbles et/ou des conducteurs électriques et à autoriser l'entrée desdits câbles et/ou des conducteurs électriques à l'intérieur de ladite boîte d'encastrement.

Selon l'invention, ledit aménagement comprend, d'une part, sur la face externe (101A) de ladite paroi latérale, une nervure en V (111) définissant entre ses branches (111A, 111B) un logement (112) apte à accueillir l'extrémité coupée de gaines de différents diamètres, et, d'autre part, au droit dudit logement, un agencement (113) de ladite paroi latérale autorisant les câbles et/ou les conducteurs en provenance de ladite gaine rapportée dans ledit logement à traverser ladite paroi latérale pour entrer dans ladite boîte d'encastrement tout en assurant une étanchéité entre l'intérieur et l'extérieur de celle-ci.

## Description

La présente invention concerne de manière générale les boîtes électriques destinées à recevoir des câbles et/ou des conducteurs électriques.

De telles boîtes sont notamment des boîtes pour appareillage électrique à encastrer dans une paroi ou à rapporter en saillie sur une paroi, une boîte de dérivation de câbles et/ou de conducteurs électriques, une boîte formant tableau d'abonné à encastrer ou à rapporter en saillie sur une paroi quelconque.

L'invention trouve une application particulièrement avantageuse dans la réalisation d'une boîte d'encastrement d'appareillages électriques à placer dans une paroi dure du type paroi en briques ou en carreaux de plâtre et à sceller avec un produit de scellement ajouté.

Elle concerne en particulier une boîte comprenant une paroi latérale pourvue localement d'au moins un aménagement apte à accueillir, de manière étanche, l'extrémité coupée d'une gaine de transport des câbles et/ou des conducteurs électriques et à autoriser l'entrée desdits câbles et/ou des conducteurs électriques à l'intérieur de ladite boîte d'encastrement.

Actuellement, les aménagements des boîtes connues comprennent des trous réalisés par défoncement d'une partie de la paroi latérale desdites boîtes, ces trous présentant un diamètre donné correspondant à une gaine de diamètre déterminé.

L'ajustement de l'extrémité coupée de la gaine dans le trou correspondant formé dans la paroi latérale de ladite boîte permet de réaliser l'étanchéité au niveau du trou et, notamment, lors du scellage de ladite boîte d'encastrement dans la paroi dure, le produit de scellement ne peut entrer à l'intérieur de celle-ci.

L'inconvénient principal de telles boîtes est que l'installateur doit intervenir sur celles-ci avant d'y apporter une gaine, pour défoncer les zones défonçables et réaliser les trous d'entrée des gaines correspondantes.

En outre, chaque trou formé dans la paroi latérale d'une boîte connue correspond à un diamètre donné d'une gaine d'amenée de câbles. Ainsi, il est courant que la paroi latérale d'une telle boîte comporte différentes zones défonçables pour réaliser des trous de diamètres différents admettant des gaines de diamètres correspondants (voir notamment la boîte décrite dans le document EP 0 156 841 ).

Cela complique la réalisation d'une telle boîte.

Afin de remédier aux inconvénients précités, la présente invention propose une nouvelle boîte pour câbles et/ou conducteurs électriques sur laquelle l'installateur n'a pas à intervenir pour mettre en place des gaines de diamètres différents pour amener lesdits câbles et/ou lesdits conducteurs électriques à l'intérieur de ladite boîte d'encastrement.

Plus particulièrement, l'invention propose une boîte, telle que définie en introduction, caractérisée en ce que ledit aménagement de la paroi latérale comprend, d'une part, sur la face externe de ladite paroi latérale, une nervure en V définissant entre ses branches un logement apte accueillir l'extrémité coupée de gaines de différents diamètres, et, d'autre part, au droit dudit logement, un agencement de ladite paroi latérale autorisant les câbles et/ou les conducteurs en provenance de ladite gaine rapportée dans ledit logement à traverser ladite paroi latérale pour entrer dans ladite boîte d'encastrement tout en assurant une étanchéité entre l'intérieur et l'extérieur de celle-ci.

Ainsi, grâce à l'invention, après avoir tiré les câbles et/ou les conducteurs électriques d'une gaine, l'installateur peut aisément mettre en place l'extrémité coupée de cette gaine dans le logement défini à l'intérieur de la nervure en V prévue sur la paroi latérale de ladite boîte, et introduire à l'intérieur de celle-ci les câbles et/ou les conducteurs électriques.

Au cours de ces opérations, l'installateur n'a pas besoin d'intervenir sur la boîte elle-même pour la modifier, ce qui est un gain de temps et d'argent.

D'autres caractéristiques non limitatives et avantageuses de la boîte selon l'invention sont les suivantes :
- la tranche intérieure de ladite nervure en V comporte une rainure dans laquelle coulisse un anneau de l'extrémité coupée de chaque gaine annelée ;
- la tranche intérieure de ladite nervure en V comporte des crans d'arrêt des différentes gaines à rapporter dans le logement défini entre les branches de la nervure en V ;
- la tranche intérieure de ladite nervure en V comporte une pluralité d'empreintes en forme de segments de cercle de diamètres différents, chaque empreinte formant un berceau de réception circulaire d'une extrémité coupée d'une gaine d'un diamètre donné ;
- lesdites empreintes prévues sur la tranche intérieure de ladite nervure en V sont raccordées entre elles pour former des crans d'arrêt d'une extrémité coupée d'une gaine d'un diamètre donné ;
- la tranche intérieure de ladite nervure en V est conformée en trois berceaux de réception circulaires aptes à recevoir trois extrémités coupées de trois gaines de diamètres différents, un berceau de petit diamètre prévu dans le fond de la nervure en V, un berceau de moyen diamètre prévu dans une partie médiane de la nervure en V et un berceau de grand diamètre prévu à l'embouchure de la nervure en V;
- le berceau de réception circulaire de petit diamètre est apte à recevoir l'extrémité coupée d'une gaine de diamètre de 16 mm, le berceau de réception circulaire de moyen diamètre est apte à recevoir l'extrémité coupée d'une gaine de diamètre de 20 mm et le berceau de réception circulaire de grand diamètre est apte à recevoir l'extrémité coupée d'une gaine de diamètre de 25 mm ;
- Chaque nervure en V est positionnée sur la face externe de ladite paroi latérale de telle sorte que le fond de ladite nervure en V est placé à proximité du fond de ladite boîte ;
- chaque nervure en V est positionnée sur la face externe de ladite paroi latérale de telle sorte que le fond de ladite nervure en V est placé à proximité du bord de l'ouverture frontale de ladite boîte ;
- ledit agencement de ladite paroi latérale prévu au droit du logement défini entre les branches de la nervure en V comprend une pluralité de fentes parallèles réalisées dans ladite paroi latérale définissant entre elles des lamelles et permettant l'entrée des câbles et/ou des conducteurs électriques à l'intérieur de la boîte d'encastrement ;
- ledit agencement de la paroi latérale au droit du logement défini entre les branches de la nervure en V comprend une partie souple défonçable ou transperçable par les câbles et/ou les conducteurs électriques à introduire à l'intérieur de ladite boîte d'encastrement ;
- la boîte comprend une pluralité d'aménagements répartis sur toute la surface de ladite paroi latérale ;
- elle est réalisée d'une seule pièce par moulage d'une matière plastique ; et
- la boîte est une boîte d'encastrement d'au moins un appareillage électrique destinée à être scellée dans une paroi dure à l'aide d'un produit de scellement, ledit agencement de ladite paroi latérale prévu au droit du logement défini entre les branches de chaque nervure en V assurant une étanchéité au produit de scellement entre l'intérieur et l'extérieur de ladite boîte d'encastrement.

La description qui va suivre en regard des dessins annexés, donnés à titre d'exemples non limitatifs, fera bien comprendre en quoi consiste l'invention et comment elle peut être réalisée :

### Sur les dessins annexés :

- la figure 1 est une vue schématique en perspective d'un mode de réalisation de la boîte selon l'invention ;
- la figure 2 est une vue de détail de la boîte de la figure 1 ;
- les figures 3A, 3B et 3C sont des vues schématiques de détail de la boîte de la figure 1 sur laquelle sont rapportées des gaines d'amenée de câbles et/ou de conducteurs électriques de différents diamètres.

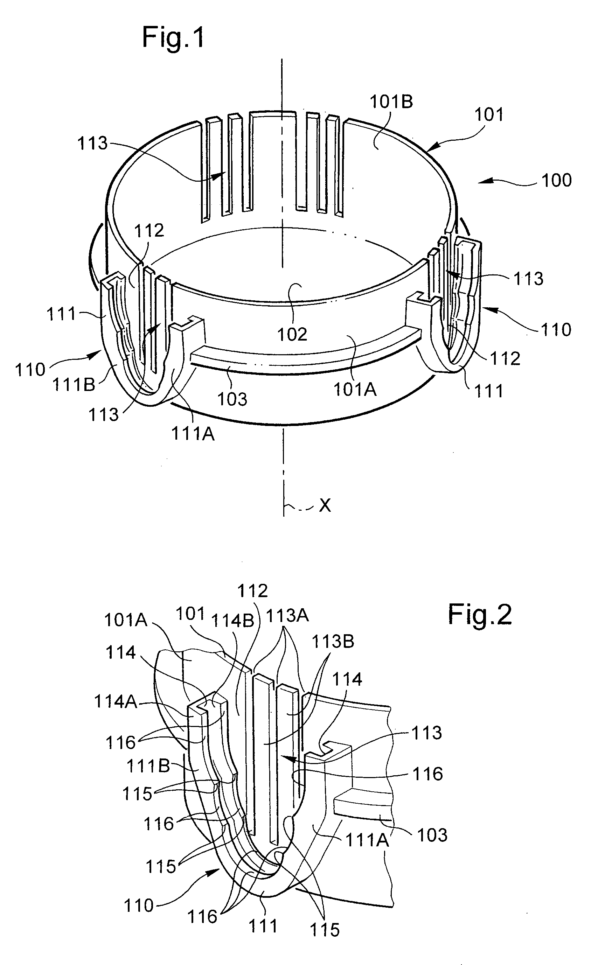

Sur les figures 1 et 2, on a représenté une boîte d'encastrement 100 d'un appareillage électrique (non représenté) à placer dans une paroi dure du type paroi en briques ou en carreaux de plâtre et à sceller avec un produit de scellement ajouté.

Cette boîte d'encastrement 100 comporte une paroi latérale 101 qui s'élève à partir d'un fond 102. Elle comporte une ouverture frontale à l'opposé dudit fond 102.

La face interne 101 B de la paroi latérale 101 délimite avec le fond 102 un logement ouvert accueillant l'appareillage électrique concerné ainsi que les câbles et/ou les conducteurs électriques nécessaires à son alimentation.

Cette paroi latérale 101 est ici une paroi cylindrique de révolution autour d'un axe X. Elle borde le fond 102 circulaire.

La paroi latérale 101 de la boîte d'encastrement 100 est pourvue d'une pluralité d'aménagements 110 répartis à des endroits distincts sur toute sa surface.

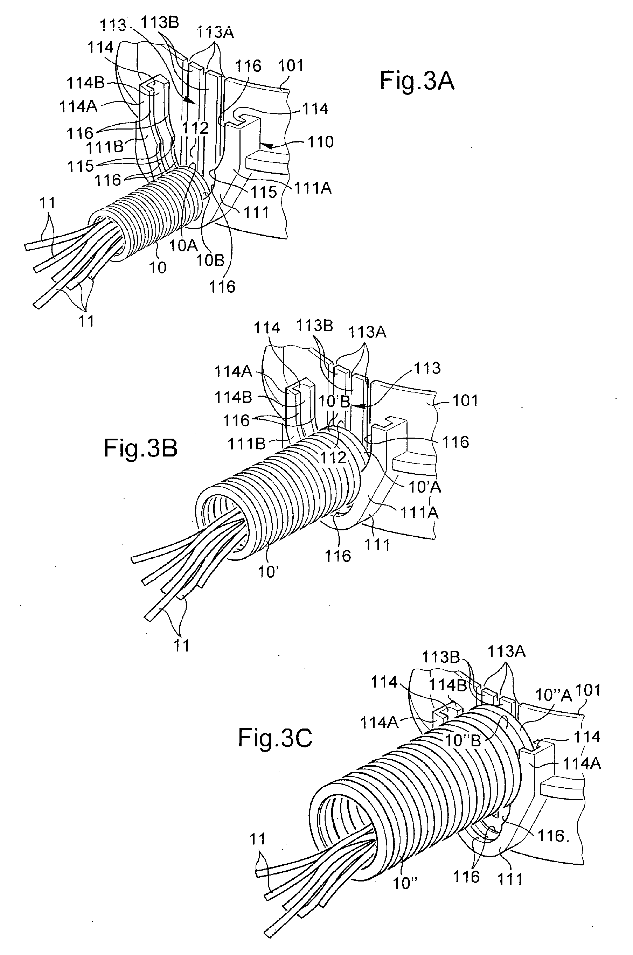

Chaque aménagement 110 est apte à accueillir, de manière étanche au produit de scellement, l'extrémité coupée d'une gaine 10 ; 10' ; 10" de transport de câbles et/ou de conducteurs électriques 11, et à autoriser l'entrée des câbles et/ou des conducteurs électriques 11 tirés de la gaine 10 ; 10' ; 10"' correspondante, à l'intérieur de ladite boîte d'encastrement 100 (voir figures 3A à 3C).

Avantageusement, selon l'invention, chaque aménagement 110 de la paroi latérale 101 de la boîte d'encastrement 100 comprend, d'une part, en saillie sur la face externe 101A de ladite paroi latérale 101, une nervure en V 111 qui définit entre ses branches 111A, 111 B divergentes un logement 112 apte à accueillir l'extrémité coupée de gaines 10 ; 10' ; 10" de différents diamètres (voir figures 3A, 3B et 3C), et, d'autre part, au droit du logement 112 défini entre les branches 111 A, 111 B de la nervure en V 111, un agencement 113 de ladite paroi latérale 101 autorisant les câbles et/ou les conducteurs électriques 11 en provenance de chaque gaine 10 ; 10' ; 10" rapportée dans le logement 112, à traverser ladite paroi latérale 101 pour entrer dans la boîte d'encastrement 100 tout en assurant une étanchéité au produit de scellement entre l'intérieur et l'extérieur de celle-ci.

Ici, chaque nervure en V 111 est disposée sur la face externe 101A de la paroi latérale 101 de la boîte d'encastrement 100 de sorte que le fond de ladite nervure en V 111 est placé à proximité du bord du fond 102 de ladite boîte d'encastrement 100.

Bien entendu, selon une variante non représentée, on pourrait prévoir que chaque nervure en V soit disposée sur la face externe de la paroi latérale de sorte que le fond de chaque nervure en V est placé à proximité du bord de l'ouverture frontale de ladite boîte.

En tout état de cause, chaque nervure en V peut être positionnée d'une manière quelconque sur la face externe de la paroi latérale de la boîte selon l'invention.

Comme le montrent plus particulièrement les figures 2 et 3A à 3C, la tranche intérieure de chaque nervure en V 111 comporte une rainure 114 de profil en U, avec deux ailes latérales parallèles 114A, 114B, à savoir une aile extérieure 114A et une aile intérieure 1148 collée contre la face externe 101 A de la paroi latérale 101, dans laquelle coulisse un anneau 10A ; 10'A ; 10"A de l'extrémité coupée de la gaine 10 ; 10' ; 10" annelée correspondante.

L'aile latérale 114A externe de chaque rainure 114 prévue sur la tranche intérieure de chaque nervure en V 111 s'engage dans une gorge circulaire 10B ; 10'B ; 10"B de la gaine 10 ; 10' ; 10" correspondante et, de cette manière, l'extrémité coupée de ladite gaine 10 ; 10' ; 10" est retenue dans le logement 112 défini à l'intérieur des branches 111A, 111B de la nervure en V 111.

En outre, comme le montre plus particulièrement la figure 2, la tranche intérieure de chaque nervure en V 111, et plus particulièrement la tranche des deux ailes latérales parallèles 114A, 114B de ladite rainure 114, comporte une pluralité d'empreintes 116 en forme de segments de cercle de différents diamètres. Chaque empreinte 116 forme un berceau de réception circulaire d'une extrémité coupée d'une gaine 10 ; 10' ; 10" d'un diamètre donné.

En particulier, comme le montrent les figures 2 et 3A, il est prévu dans le fond de chaque nervure en V 111 une empreinte semi-circulaire formant un berceau de réception de petit diamètre destiné à recevoir l'extrémité coupée d'une gaine 10 de petit diamètre (voir figure 3A).

Comme le montrent les figures 2 et 3B, il est prévu dans une partie médiane de chaque nervure en V 111 des empreintes 116 en vis-à-vis formant un berceau de réception de moyen diamètre destiné à recevoir une gaine 10' de moyen diamètre (voir figure 3B).

Enfin, à l'embouchure de chaque nervure en V 111, il est prévu des empreintes 116 en vis-à-vis en forme de segments de cercle de grand diamètre formant un berceau de réception de grand diamètre d'une gaine 10" de grand diamètre (voir figure 3C).

Selon les exemples particuliers représentés sur les figures, le berceau de réception circulaire de petit diamètre prévu dans le fond de chaque nervure en V 111 est apte à recevoir l'extrémité coupée d'une gaine 10 de diamètre de 16 mm. Le berceau de réception circulaire de moyen diamètre prévu dans une partie médiane de chaque nervure en V 111 est apte à recevoir l'extrémité coupée d'une gaine 10' de diamètre de 20 mm et le berceau de réception circulaire de grand diamètre prévu à l'embouchure de chaque nervure en V 111 est apte à recevoir l'extrémité coupée d'une gaine 10" de diamètre de 25 mm.

Les empreintes 116 prévues sur la tranche intérieure de chaque nervure en V 111 sont raccordées entre elles pour former des saillies constituant des crans d'arrêt 115 de l'extrémité coupée d'une gaine 10 ; 10' ; 10" d'un diamètre donné.

Par ailleurs, comme le montrent les figures 1, 2 et 3A à 3C, l'agencement 113 de ladite paroi latérale 101 de la boîte d'encastrement 100 prévu au droit du logement 112 défini entre les branches 111A, 111B de chaque nervure en V 111 comprend une pluralité de fentes 113A parallèles réalisées dans ladite paroi latérale 101 et orientées selon l'axe X de cette dernière.

Ces fentes 113A définissent entre elles des lamelles 113B s'étendant parallèlement à l'axe X de la paroi latérale 101. Ces lamelles assurent l'étanchéité, notamment au produit de scellement, alors que les fentes 113A permettent l'entrée des câbles et/ou des conducteurs électriques 11 tirés de la gaine 10 ; 10" ; 10" correspondante, à l'intérieur de la boîte d'encastrement.

A cet effet, les fentes 113A s'étendent sur la majeure partie de la hauteur de la paroi latérale 101 et, en tout état cause, sur la hauteur de la nervure en V 111 correspondante. Ces fentes 113A partent du fond de chaque nervure en V 111 et s'étendent jusqu'à son embouchure.

Bien entendu, selon un autre mode de réalisation non représenté de la boîte d'encastrement selon l'invention, on peut prévoir qu'au lieu de fentes et de lamelles il soit prévu, au droit du logement défini entre les branches de chaque nervure en V portée par la face externe de la paroi latérale de la boîte d'encastrement, une partie souple défonçable ou transperçable par les câbles et/ou les conducteurs provenant de la gaine et introduits à l'intérieur de ladite boîte d'encastrement.

Comme le montrent les figures, il est prévu sur la face externe 101A de la paroi latérale 101 une nervure de rigidification 103 circulaire que relient lesdites nervures en V 111 entre elles.

La boîte d'encastrement 100 est réalisée d'une seule pièce par moulage d'une matière plastique, les nervures en V 111 prévues sur la face externe 101A de sa paroi latérale 101 et les lamelles 113B venant de formation avec celle-ci. En variante, lesdites lamelles peuvent être découpées après moulage.

Ainsi, avantageusement, l'installateur n'a pas à intervenir sur la boîte d'encastrement 100 pour la modifier afin de positionner sur la face externe de sa paroi latérale des gaines 10 ; 10' ; 10" de différents diamètres en vue d'introduire les câbles électriques 11 à l'intérieur de cette boîte d'encastrement 100.

Il suffit qu'il glisse dans la nervure en V 111 correspondante l'extrémité coupée de la gaine 10 ; 10' ; 10" pour la positionner dans le logement 112 défini entre les branches 111A, 111B de cette nervure en V et la coincer dans la rainure 114 prévue sur la tranche intérieure de ladite nervure en V 111 en appui sur le cran d'arrêt 115 correspondant (voir figures 3A à 3C).

Les câbles et/ou les conducteurs électriques 11 issus de cette gaine 10 ; 10' ; 10" sont introduits à l'intérieur de la boîte d'encastrement au travers des fentes 113A prévues dans ladite paroi latérale 101.

La boîte d'encastrement 100 peut être scellée dans la paroi dure à l'aide d'un quelconque produit de scellement et, notamment, à l'aide d'une mousse de polyuréthane. Ce produit de scellement n'entre pas l'intérieur de la boîte d'encastrement, les lamelles 113C assurant l'étanchéité à ce dernier.

La présente invention n'est nullement limitée aux modes de réalisation décrits et représentés, mais l'homme du métier saura y apporter toute variante conforme à son esprit.

En particulier, la boîte selon l'invention peut être une toute autre boîte qu'une boîte d'encastrement d'un appareillage électrique.

Il peut s'agir d'une boîte pour appareillage électrique à rapporter en saillie sur une paroi quelconque.

Il peut s'agir d'une boîte de dérivation servant au routage des câbles et/ou des conducteurs électriques.

Une telle boîte de dérivation ne contient pas d'appareillage électrique.

Il peut s'agir également d'un tableau d'abonné.

Dans tous les cas, il est nécessaire d'établir normativement une certaine étanchéité entre l'intérieur et l'extérieur de la boîte. Cette étanchéité est donnée par l'agencement de paroi latérale selon l'invention.

## Revendications

1. Boîte (100) destinée à recevoir des câbles et/ou des conducteurs électriques (11), comprenant une paroi latérale (101) pourvue localement d'au moins un aménagement (110) apte à accueillir, de manière étanche, l'extrémité coupée d'une gaine (10 ; 10' ; 10") de transport des câbles et/ou des conducteurs électriques (11) et à autoriser l'entrée desdits câbles et/ou des conducteurs électriques à l'intérieur de ladite boîte d'encastrement (100), **caractérisée en ce que** ledit aménagement (110) comprend, d'une part, sur la face externe (101A) de ladite paroi latérale (101), une nervure en V (111) définissant entre ses branches (111A, 111B) un logement (112) apte à accueillir l'extrémité coupée de gaines (10 ; 10' ; 10") de différents diamètres, et, d'autre part, au droit dudit logement (112), un agencement (113) de ladite paroi latérale (101) autorisant les câbles et/ou les conducteurs (11) en provenance de ladite gaine (10 ; 10' ; 10") rapportée dans ledit logement (112) à traverser ladite paroi latérale (101) pour entrer dans ladite boîte d'encastrement (100) tout en assurant une étanchéité entre l'intérieur et l'extérieur de celle-ci.

2. Boîte (100) selon la revendication 1, **caractérisée en ce que** la tranche intérieure de ladite nervure en V (111) comporte une rainure (114) dans laquelle coulisse un anneau (10A ; 10'A ; 10"A) de l'extrémité coupée de chaque gaine (10 ; 10' ; 10") annelée.

3. Boîte (100) selon l'une des revendications 1 ou 2, **caractérisée en ce que** la tranche intérieure de ladite nervure en V (111 ) comporte des crans d'arrêt (115) des différentes gaines (10 ; 10' ; 10") à rapporter dans le logement (112) défini entre les branches (111A, 111 B) de la nervure en V (111 ).

4. Boîte (100) selon l'une des revendications 1 à 3, **caractérisée en ce que** la tranche intérieure de ladite nervure en V (111) comporte une pluralité d'empreintes (116) en forme de segments de cercle de diamètres différents, chaque empreinte formant un berceau de réception circulaire d'une extrémité coupée d'une gaine (10 ; 10' ; 10") d'un diamètre donné.

5. Boîte (100) selon la revendication 4, **caractérisée en ce que** lesdites empreintes (116) prévues sur la tranche intérieure de ladite nervure en V (111) sont raccordées entre elles pour former des crans d'arrêt (115) d'une extrémité coupée d'une gaine (10 ; 10' ; 10") d'un diamètre donné.

6. Boîte (100) selon l'une des revendications 4 ou 5, **caractérisée en ce que** la tranche intérieure de ladite nervure en V (111) est conformée en trois berceaux de réception circulaires aptes à recevoir trois extrémités coupées de trois gaines de diamètres différents, un berceau de petit diamètre prévu dans le fond de la nervure en V (111), un berceau de moyen diamètre prévu dans une partie médiane de la nervure en V (111) et un berceau de grand diamètre prévu à l'embouchure de la nervure en V.

7. Boîte (100) selon la revendication 6, **caractérisée en ce que** le berceau de réception circulaire de petit diamètre est apte à recevoir l'extrémité coupée d'une gaine de diamètre de 16 mm, le berceau de réception circulaire de moyen diamètre est apte à recevoir l'extrémité coupée d'une gaine de diamètre de 20 mm et le berceau de réception circulaire de grand diamètre est apte à recevoir l'extrémité coupée d'une gaine de diamètre de 25 mm.

8. Boîte (100) selon l'une des revendications 1 à 7, **caractérisée en ce que** chaque nervure en V (111) est positionnée sur la face externe (101A) de ladite paroi latérale (101) de telle sorte que le fond de ladite nervure en V (111) est placé à proximité du fond de ladite boîte.

9. Boîte (100) selon l'une des revendications 1 à 7, **caractérisée en ce que** chaque nervure en V (111) est positionnée sur la face externe (101 A) de ladite paroi latérale (101) de telle sorte que le fond de ladite nervure en V (111) est placé à proximité du bord de l'ouverture frontale de ladite boîte.

10. Boîte (100) selon l'une des revendications 1 à 9, **caractérisée en ce que** ledit agencement (113) de ladite paroi latérale (101) prévu au droit du logement (112) défini entre les branches (111A, 111B) de la nervure en V comprend une pluralité de fentes (113A) parallèles réalisées dans ladite paroi latérale (101) définissant entre elles des lamelles (113B) et permettant l'entrée des câbles et/ou des conducteurs électriques (11) à l'intérieur de la boîte d'encastrement.

11. Boîte (100) selon l'une des revendications 1 à 9, **caractérisée en ce que** ledit agencement de la paroi latérale au droit du logement défini entre les branches de la nervure en V comprend une partie souple défonçable ou transperçable par les câbles et/ou les conducteurs électriques à introduire à l'intérieur de ladite boîte d'encastrement.

12. Boîte (100) selon l'une quelconque des revendications 1 à 11, **caractérisée en ce qu'**elle comprend une pluralité d'aménagements (110) répartis sur toute la surface de ladite paroi latérale (101).

13. Boîte (100) selon l'une quelconque des revendications 1 à 12, **caractérisée en ce qu'**elle est réalisée d'une seule pièce par moulage d'une matière plastique.

14. Boîte (100) selon l'une quelconque des revendications 1 à 13, **caractérisée en ce que** la boîte est une boîte d'encastrement d'au moins un appareillage électrique destinée à être scellée dans une paroi dure à l'aide d'un produit de scellement, ledit agencement (113) de ladite paroi latérale (101) prévu au droit du logement défini entre les branches (111A, 111B) de chaque nervure en V (111) assurant une étanchéité au produit de scellement entre l'intérieur et l'extérieur de ladite boîte d'encastrement (100).
